# EUROPEAN PATENT APPLICATION

(11) **EP 4 624 983 A1**
(43) Date of publication of application: **01.10.2025**
(21) Application number: 24222239.6
(22) Date of filing: 20.12.2024
(51) Int. Cl.: G01S 7/481

(54) **LIDAR AND AUTONOMOUS DRIVING DEVICE**

(30) Priority: 29.03.2024 CN 202410387719
(71) Applicant: Suteng Innovation Technology Co., Ltd., Shenzhen City Guangdong 518000 (CN)
(72) Inventor: LIU, Guoguang, Shenzhen (CN); JIANG, Shen, Shenzhen (CN); LU, Pan, Shenzhen (CN)
(74) Representative: Ran, Handong

(57) **Abstract**

Embodiments of the present application disclose a LiDAR and an autonomous driving device, wherein the LiDAR comprises a housing, a light deflection scanning element, a transceiver module and a window mirror assembly; the transceiver module and the light deflection scanning element are both arranged in the housing; the transceiver module is configured to generate an emitted laser beam and receive a reflected laser beam; the light deflection scanning element is configured to deflect the emitted laser beam toward the window mirror assembly, and receive and deflect the reflected laser beam; the window mirror assembly is configured to transmit the emitted laser beam and the reflected laser beam; the light deflection scanning element and the transceiver module are arranged along a first direction; the light deflection scanning element and the window mirror assembly are arranged along a second direction, thereby reducing its wind resistance.

## Description

### TECHNICAL FIELD

The present application relates to the field of radar technology, and more specifically, to a LiDAR and an autonomous driving device.

### BACKGROUND

LiDAR is a radar system that detects the position, speed and other characteristics of a target by emitting a laser beam. Its working principle is to first emit a laser beam to the target, then receive the signal reflected from the target, compare the received signal with the emitted signal, and after appropriate processing, obtain relevant information about the target, such as distance, direction, altitude, speed, attitude, and even shape.

In the prior art, in order to facilitate the light deflection scanning element to reflect the laser beam, the transceiver module, the light deflection scanning element and the window mirror assembly are stacked and arranged along the height direction of the housing, resulting in a larger volume of the LiDAR in the height direction. Thereby, the size of an autonomous driving device comprising the LiDAR in the height direction is larger, which increases the wind resistance of the autonomous driving device.

### SUMMARY

Embodiments of the present application provide a LiDAR and an autonomous driving device, in which the transceiver module, the light deflection scanning element and the window mirror assembly are distributed in a direction perpendicular to the height direction, aiming to compress the thickness of the LiDAR, thereby making the LiDAR smaller in volume.

Embodiments of the present application provide a LiDAR, comprising a housing, a light deflection scanning element, a transceiver module and a window mirror assembly; the transceiver module and the light deflection scanning element are both arranged in the housing; the transceiver module is configured to generate an emitted laser beam and receive a reflected laser beam; the light deflection scanning element is configured to deflect the emitted laser beam toward the window mirror assembly, receive and deflect the reflected laser beam returned from a measured area toward the transceiver module; the window mirror assembly is configured to transmit the emitted laser beam and the reflected laser beam; wherein the light deflection scanning element and the transceiver module are arranged along a first direction; the light deflection scanning element and the window mirror assembly are arranged along a second direction; the first direction is perpendicular to the second direction, and the first direction and the second direction are both perpendicular to the height direction of the housing.

In some embodiments, the LiDAR also comprises a main control circuit board, which is arranged in the housing and has an avoidance groove, which penetrates the main control circuit board in the height direction, and the light deflection scanning element is arranged in the avoidance groove.

In some embodiments, the housing has a first embedding groove and a second embedding groove that are arranged opposite to each other along the height direction, wherein the light deflection scanning element is respectively embedded in the first embedding groove and the second embedding groove at two opposite sides along the height direction.

In some embodiments, the light deflection scanning element comprises a bracket and a scanning body fixed to the bracket; the housing has connection protrusions arranged at intervals, the connection protrusions extend in the height direction of the housing, and the bracket is against the connection protrusions on opposite sides in a direction perpendicular to the height direction of the housing, and the bracket is detachably connected to the connection protrusions.

In an embodiment, one of the connection protrusion and the bracket is provided with a positioning column, and the other of the connection protrusion and the bracket is provided with a positioning hole, and the positioning column is inserted into the positioning hole.

In some embodiments, one of the connection protrusion and the bracket is provided with a locking hole, and the other of the two is provided with a locking fastener hole, and the locking hole and the locking fastener hole are connected and matched by a screw.

In some embodiments, the transceiver module includes an emitting assembly, a receiving assembly and a beam splitting assembly, the emitting assembly is configured to generate the emitted laser beam; the receiving assembly is configured to receive the reflected laser beam; the beam splitting assembly is configured to separate the optical paths of the emitted laser beam and the reflected laser beam; wherein the emitting assembly and the receiving assembly are arranged along a first direction.

In some embodiments, the LiDAR includes a first reflex mirror, which is configured to deflect the emitted laser beam from the emitting assembly and direct it toward the light deflection scanning element, and is configured to deflect the reflected laser beam from the light deflection scanning element and direct it toward the receiving assembly. The first reflex mirror and the window mirror assembly are arranged side by side along the first direction.

In some embodiments, the housing comprises a front mounting plate extending in the first direction, and the first reflex mirror and the window mirror assembly are both arranged on the front mounting plate.

In some embodiments, the emitting assembly comprises an emitting module which comprises a lower shell, an upper shell and an emitting circuit board, the lower shell is connected to the housing; the upper shell is connected to the lower shell, the upper shell and the lower shell form an accommodating cavity, the upper shell has a light outlet, and the emitted laser beam is emitted from the light outlet; the emitting circuit board is arranged in the accommodating cavity; and the upper shell, the lower shell and the emitting circuit board are arranged along the height direction of the housing.

In some embodiments, the upper shell forms a limiting groove, the emitting circuit board is embedded in the limiting groove, the lower shell covers the notch of the limiting groove to cooperate with the upper shell to form an accommodating cavity, and the light outlet passes through the groove wall of the limiting groove.

In some embodiments, a thermal conductive adhesive groove is provided on a side of the lower shell facing away from the upper shell, the thermal conductive adhesive groove is filled with thermal conductive adhesive, and the thermal conductive adhesive contacts the inner wall surface of the housing.

In some embodiments, the emitting module further comprises a fast axis collimating lens, which is connected to the upper shell and arranged at the light outlet.

In some embodiments, the upper shell includes an upper shell body and an extending portion, the upper shell body cooperates with the lower shell to form an accommodating cavity, the light outlet is opened in the upper shell body, the extending portion is connected to the outer peripheral side of the upper shell body and is arranged corresponding to the light outlet, and the fast axis collimating lens is fixed on the extending portion.

In some embodiments, the window mirror assembly comprises a lens barrel, a first window mirror and a second window mirror, the lens barrel is connected to the housing; the first window mirror and the second window mirror are both connected to the lens barrel and are respectively located at two ends of the lens barrel.

In some embodiments, the lens barrel comprises a barrel body and a mounting portion connected to the barrel body, an optical channel is formed in the barrel body, and the mounting portion is connected to the housing; wherein a first connecting groove is provided at one end of the optical channel facing away from the light deflection scanning element, the first connecting groove comprises a first groove bottom wall and a first groove side wall, and the first window mirror is embedded in the first connecting groove; a second connecting groove is provided at one end of the optical channel facing the light deflection scanning element, and the second window mirror is embedded in the second connecting groove.

In some embodiments, the housing comprises a front mounting plate extending in a first direction, the front mounting plate has a mounting hole, the barrel is passed through the mounting hole, and an outer side wall of the barrel abuts against a hole wall of the mounting hole.

An embodiment of the present application provides an autonomous driving device, which comprises a device body and a LiDAR mounted on the device body.

The transceiver module, the light deflection scanning element and the window mirror assembly are distributed in the first direction and the second direction, that is, the three will not be stacked in the height direction of the housing, so the thickness of the housing can be reduced to reduce the volume of the LiDAR at least in the height direction. The autonomous driving device with the LiDAR of the present application will not cause too much increase in the size of the autonomous driving device in the height direction due to the smaller size of the LiDAR in the height direction. In this way, the size of the autonomous driving device in the height direction can be reduced, thereby reducing its wind resistance.

### BRIEF DESCRIPTION OF DRAWINGS

Fig. 1 is a schematic diagram of the structure of a LiDAR in an embodiment of the present application;
Fig. 2 is a schematic diagram of the decomposed structure of a LiDAR in an embodiment of the present application;
Fig. 3 is a schematic diagram of the exploded structure of a LiDAR in an embodiment of the present application;
Fig. 4 is a schematic diagram of a partial decomposition structure of a LiDAR in an embodiment of the present application;
Fig. 5 is an enlarged schematic diagram of the structure at A in Fig. 4;
Fig. 6 is an enlarged schematic diagram of the structure at B in Fig. 4;
Fig. 7 is a schematic diagram of the decomposed structure of a LiDAR in an embodiment of the present application;
Fig. 8 is a schematic diagram of a partial structure of a LiDAR in an embodiment of the present application;
Fig. 9 is a schematic diagram of the decomposed structure of an emitting module in an embodiment of the present application;
Fig. 10 is a schematic diagram of the decomposed structure of an emitting module in an embodiment of the present application;
Fig. 11 is a schematic diagram of a partial cross-sectional structure along line C-C in Fig. 1;
Fig. 12 is a schematic diagram of the decomposed structure of a window mirror assembly in an embodiment of the present application;
Fig. 13 is a schematic diagram of the decomposed structure of a window mirror assembly in an embodiment of the present application.

Reference signs: 1, LiDAR; 11, housing; 11A, inner cavity; 111, top housing; 111A, first embedding groove; 111B, vent hole; 112, bottom housing; 112A, second embedding groove; 113, connection protrusion; 113A, locking hole; 114, positioning column; 115, positioning protrusion; 115A, positioning groove; 116, front mounting plate; 116A, mounting hole; 116B, mounting groove; 1161 , abutting portion; 117, boss; 1171, first convex portion; 1171A, bonding area; 1172, second convex portion; 118, adhesive member; 12, light deflection scanning element; 121, bracket; 121A, positioning hole; 121B, locking fastener hole; 122, scanning body; 13, transceiver module; 131, emitting assembly; 1311, emitting module; 1311A, accommodating cavity; 13111, lower shell; 13111A, fastening hole; 13111B, thermal conductive glue groove; 13111C, glue dispensing port; 13112, upper shell; 13112A, light outlet; 13112B, limiting groove; 13112C, connecting hole; 13112D, first glue dispensing groove; 13112-1, upper shell body; 13112-2, extending portion; 13112-2A, fixing groove; 13113, emitting circuit board; 13114, soft pad; 13115, limiting portion; 1312, collimating module; 13121, fast axis collimating lens; 13122, slow axis collimating lens; 1313, beam reduction mirror; 132, receiving assembly; 1321, receiving module; 13211, receiver; 13212, receiving board; 1322, focusing module; 13221, first focusing lens; 13222, second reflex mirror; 13223, second focusing lens; 133, beam splitter assembly; 1331, beam splitter; 14, window mirror assembly; 141, lens barrel; 1411, barrel body; 1411A, optical channel; 1411B, first connecting groove; 1411B1, first groove bottom wall; 1411B2, first groove side wall; 1411B3, first surface; 1411C, second connecting groove; 1411C1, second groove side wall; 1411C2, second surface; 1411D, second glue dispensing groove; 1411E, third glue dispensing groove; 1411F, fourth glue dispensing groove; 1411G, fifth glue dispensing groove; 14111, matting structure; 14111A, matting groove; 1412, mounting portion; 1412A, sixth glue dispensing groove; 142, first window mirror; 142A, first light-transmitting surface; 142B, first abutting surface; 142C, third light-transmitting surface; 143, second window mirror; 143A, second light-transmitting surface; 143B, fourth light-transmitting surface; 15, main control circuit board; 15A, avoidance groove; 16, sealing ring; 17, waterproof breathable membrane; 18, connector; 19, interface board; 20, first reflex mirror; a, emitted laser beam; b, reflected laser beam; X, first direction; Y, second direction; Z, height direction.

### DETAILED DESCRIPTION

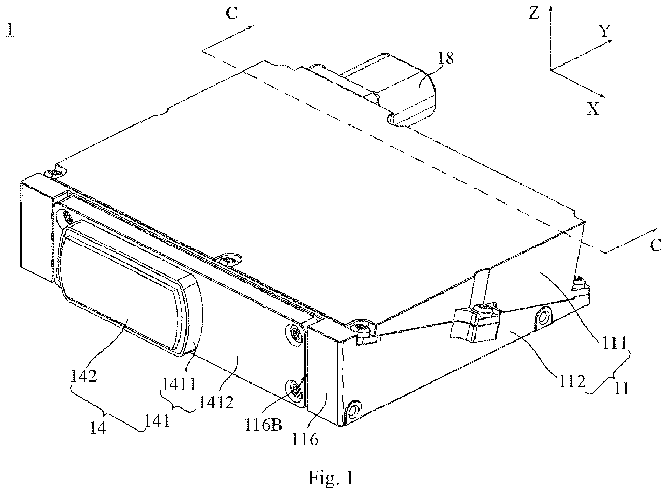

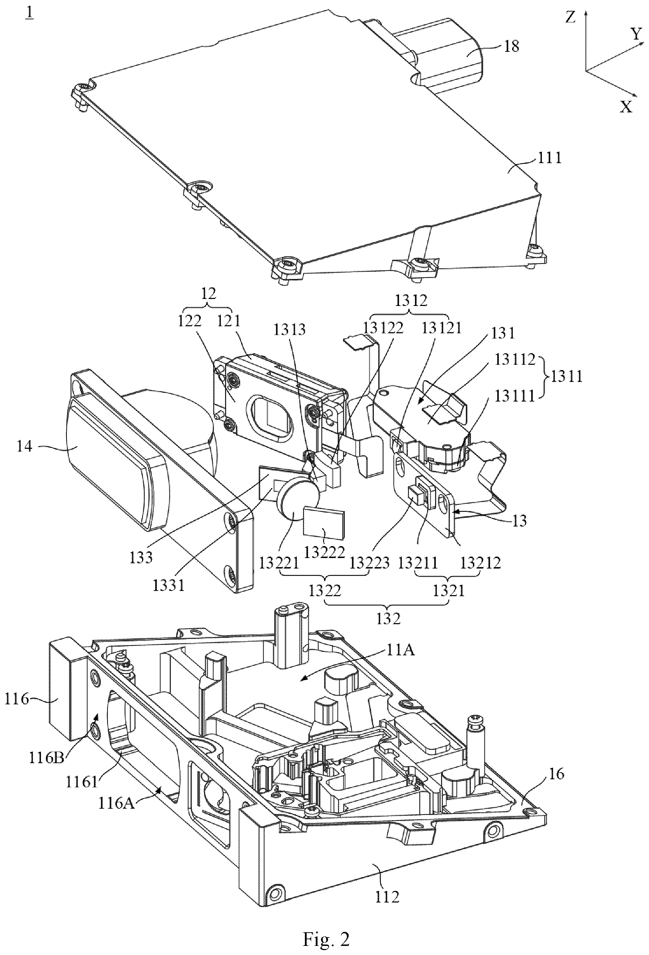

In a first aspect, referring to Figs. 1 and 2. An embodiment of the present application provides a LiDAR 1, including a housing 11, a light deflection scanning element 12, a transceiver module 13 and a window mirror assembly 14; the transceiver module 13 and the light deflection scanning element 12 are both arranged in the housing 11.

The housing 11 is used to protect the internal transceiver module 13 and the light deflection scanning element 12, and to reduce the probability of damage to the transceiver module 13 and the light deflection scanning element 12, so that the transceiver module 13 and the light deflection scanning element 12 can have a longer life, and the LiDAR 1 can have a longer service life. The housing 11 comprises a top housing 111 and a bottom housing 112, with the top housing 111 and the bottom housing 112 forming an inner cavity 11A. The light deflection scanning element 12, the transceiver module 13 and the window mirror assembly 14 can be connected to at least one of the top housing 111 and the bottom housing 112 to form a corresponding top housing module and bottom housing module, so that the LiDAR 1 can be modularly assembled, a quantity of production materials can be reduced, and the production is convenient. In an embodiment, the material of the housing 11 can be metal or plastic.

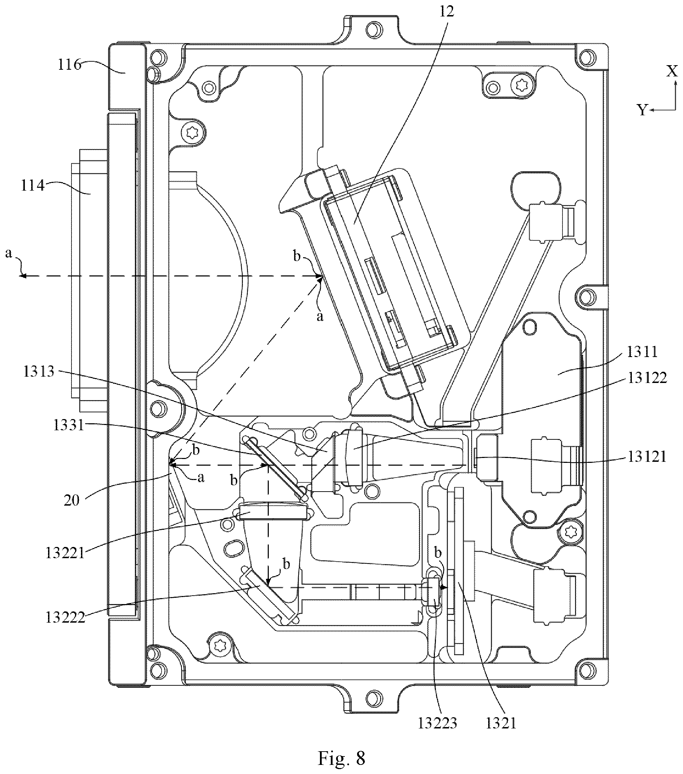

Transceiver module 13 is used to generate an emitted laser beam a (refer to Fig. 8), and emit it to the measured area via the light deflection scanning element 12 and the window mirror assembly 14. The transceiver module 13 is used to receive a reflected laser beam b (refer to Fig. 8) returned from the measured area via the window mirror assembly 14 and deflected by the light deflection scanning element 12, so as to obtain relevant information of the target, such as target distance, direction, height, speed, posture, and even shape and other parameters.

The light deflection scanning element 12 is used to reflect the emitted laser beam a and the reflected laser beam b transmitted through the window mirror. The light deflection scanning element 12 includes but is not limited to an optical scanning mirror and a Micro-Electro-Mechanical System (MEMS) galvanometer. In an embodiment of the present application, a MEMS galvanometer can be used to make full use of its small structure to further reduce the space occupied by the light deflection scanning element 12 in the housing 11, thereby reducing the volume of the LiDAR 1; and the MEMS galvanometer has a longer service life than the optical scanning mirror, which can make the LiDAR 1 have a longer service life; the MEMS galvanometer is more sensitive than the optical scanning mirror, thereby improving the performance of the LiDAR 1.

The window mirror assembly 14 is used to transmit the emitted laser beam a and the reflected laser beam b. In an embodiment, the window mirror assembly 14 may include an angle-expanding lens, which can increase the outgoing angle of the emitted laser beam a to increase the field of view of the LiDAR 1, thereby ensuring that when a set of transceiver modules 13 is used, the LiDAR 1 has a larger field of view to increase the detection range of the LiDAR 1, thereby improving the detection efficiency of the LiDAR 1.

Referring to Figs. 1 and 2. In an embodiment, the light deflection scanning element 12 and the transceiver module 13 are arranged along the first direction X; the light deflection scanning element 12 and the window mirror assembly 14 are arranged along the second direction Y; the first direction X is perpendicular to the second direction Y, and the first direction X and the second direction Y are perpendicular to the height direction Z of the housing 11, so that the transceiver module 13, the light deflection scanning element 12 and the window mirror assembly 14 are not stacked in the height direction Z, thereby reducing the height dimension occupied by the transceiver module 13, the light deflection scanning element 12 and the window mirror assembly 14, so as to reduce the size of the housing 11 in the height direction Z, and then reduce the size of the LiDAR 1.

In some embodiments, the light deflection scanning element 12 and the transceiver module 13 may be arranged along the second direction Y; the light deflection scanning element 12 and the window mirror assembly 14 may be arranged along the first direction X. In other embodiments, the light deflection scanning element 12, the transceiver module 13 and the window mirror assembly 14 may also be arranged in other ways, and the positions of the light deflection scanning element 12, the transceiver module 13 and the window mirror assembly 14 may be rearranged according to design requirements.

In an embodiment of the present application, by distributing the transceiver module 13, the light deflection scanning element 12, and the window mirror assembly 14 in the first direction X and the second direction Y, the thickness of the housing 11 can be reduced to reduce the volume of the LiDAR 1. By using a MEMS galvanometer, the space occupied by the light deflection scanning element 12 in the housing 11 can be reduced, thereby reducing the volume of the LiDAR 1 and improving the performance of the LiDAR 1. By providing a group of transceiver modules 13, a quantity of components in the housing 11 is reduced to reduce the volume of the LiDAR 1.

Furthermore, by setting multiple output chips on an emitting circuit board 13113 of the transceiver module 13, the same transceiver module 13 can emit multiple output laser beams a, thereby improving the detection accuracy of the LiDAR 1. Furthermore, by adjusting the frequency of each output laser beam a, the detection accuracy of the LiDAR 1 can be further improved.

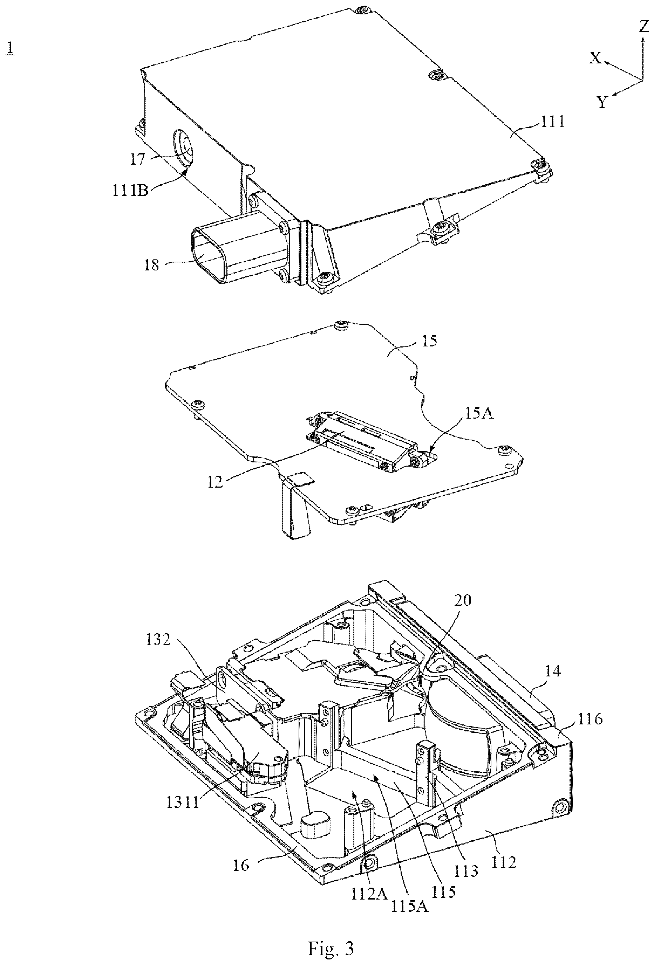

Referring to Fig. 3. In an embodiment, the LiDAR 1 comprises a main control circuit board 15, which is disposed in the housing 11 and has an avoidance groove 15A. The avoidance groove 15A penetrates the main control circuit board 15 in the height direction Z. The light deflection scanning element 12 is disposed in the avoidance groove 15A, so that the thickness of the housing 11 can be further reduced to reduce the volume of the LiDAR 1. The main control circuit board 15 is electrically connected to the light deflection scanning element 12 and the transceiver module 13, and is used to control the deflection direction and deflection angle of the light deflection scanning element 12, and is used to control the transceiver module 13 to emit the emitted laser beam a and receive the reflected laser beam b.

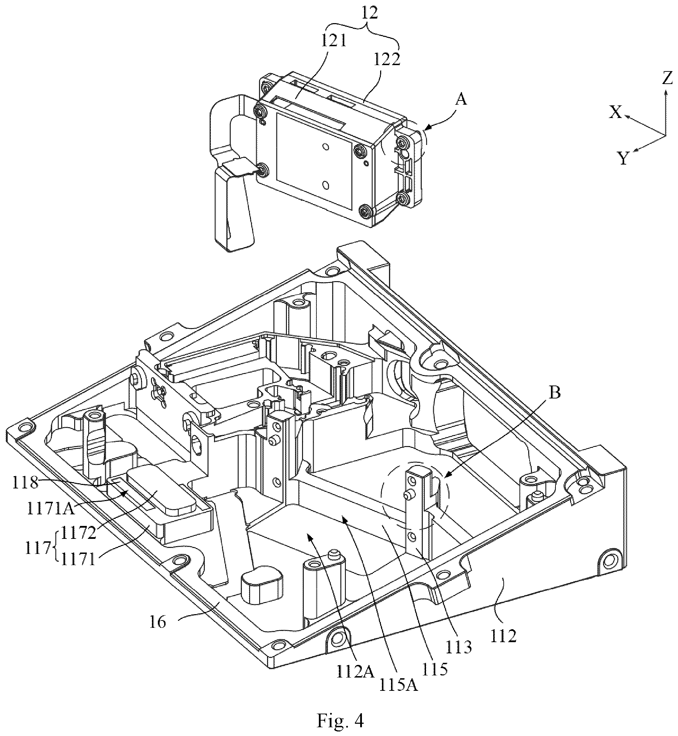

Referring to Figs. 1 and 4. In an embodiment, the light deflection scanning element 12 comprises a bracket 121 and a scanning body 122 fixed to the bracket 121; the housing 11 has spaced-apart connection protrusions 113, which extend in the height direction Z of the housing 11, and the bracket 121 is against the connection protrusions 113 on opposite sides in a direction perpendicular to the height direction Z of the housing 11, and the bracket 121 is detachably connected to the connection protrusions 113.

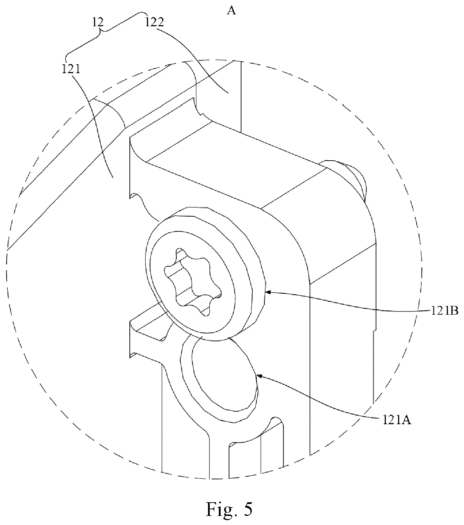

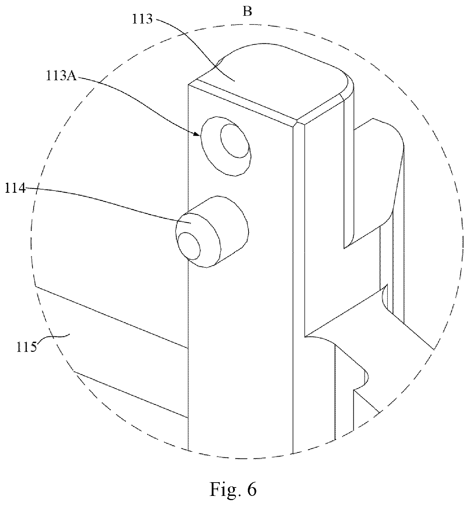

Referring to Figs. 1 and 4-6. The connection protrusion 113 is provided with a locking hole 113A, and the bracket 121 is provided with a locking fastener hole 121B. The locking hole 113A and the locking fastener hole 121B are connected and matched by a screw, to facilitate locking the bracket 121 and the housing 11. The screw connection allows for easy disassembly when adjustments are needed for the light deflection scanning element 12, enabling direct removal and adjustment of the light deflection scanning element 12 by disassembling the screw. This improves the ease of disassembly and assembly of the light deflection scanning element 12, while ensuring its reliable installation.

Referring to Figs. 1 and 4-6. The connection protrusion 113 has a positioning column 114 on the side facing the light deflection scanning element 12, and the bracket 121 has a positioning hole 121A on the side facing the connection protrusion 113. The positioning column 114 is inserted into the positioning hole 121A, to facilitate the positioning of the bracket 121 and the housing 11, thereby improving the installation accuracy of the light deflection scanning element 12, so as to improve the scanning accuracy of the emitted laser beam a, and further improve the detection accuracy of the LiDAR 1. In some embodiments, the connection protrusion 113 is provided with a positioning hole 121A, the bracket 121 is provided with a positioning column 114, and the positioning column 114 is inserted into the positioning hole 121A, so that the installation between the bracket 121 and the housing 11 can also be positioned.

In some embodiments, the connection protrusion 113 is provided with a locking fastener hole 121B, and the bracket 121 is provided with a locking hole 113A. The locking hole 113A and the locking fastener hole 121B are connected and matched by a screw, which is also convenient for locking the bracket 121 and the housing 11.

Referring to Figs. 1 and 4. In an embodiment, the housing 11 further has a positioning protrusion 115, which is arranged between the two connection protrusions 113. When the bracket 121 is connected to the connection protrusion 113, the surface of the bracket 121 facing the window mirror assembly 14 abuts against the positioning protrusion 115. The upper surface of the positioning protrusion 115 away from the housing 11 is inclined, and the side of the bracket 121 that abuts against the upper surface of the positioning protrusion 115 is also correspondingly inclined. The bracket 121 can be positioned to facilitate the positioning of the light deflection scanning element 12. This improves the assembly efficiency of the light deflection scanning element 12 with the housing 11, thereby improving the assembly efficiency of the LiDAR 1. Once assembled, it also plays a fixing role, enhancing the reliability of the light deflection scanning element 12 and resisting vibrations during use.

Referring to Figs. 1 and 4, the positioning protrusion 115 is recessed toward the window mirror assembly 14 compared to the connection protrusion 113, to form a positioning groove 115A. By utilizing the partial contact between the groove side wall of the positioning groove 115A and the outer surface of the bracket 121, the installation efficiency of the light deflection scanning element 12 can be improved, improving the assembly efficiency of the LiDAR 1.

Part of the bracket 121 is embedded in the positioning groove 115A along the direction toward the window mirror assembly 14, thereby shortening the distance between the window mirror assembly 14 and the light deflection scanning element 12, to shorten the optical path; and the connection protrusion 113 has a cross-section perpendicular to the optical path on the side facing the window mirror assembly 14, and the area of the cross-section gradually decreases along the direction toward the window mirror assembly 14, to reduce the blocking effect of the connection protrusion 113 on the optical path, while reducing the formation of stray light to improve the detection accuracy of the LiDAR 1.

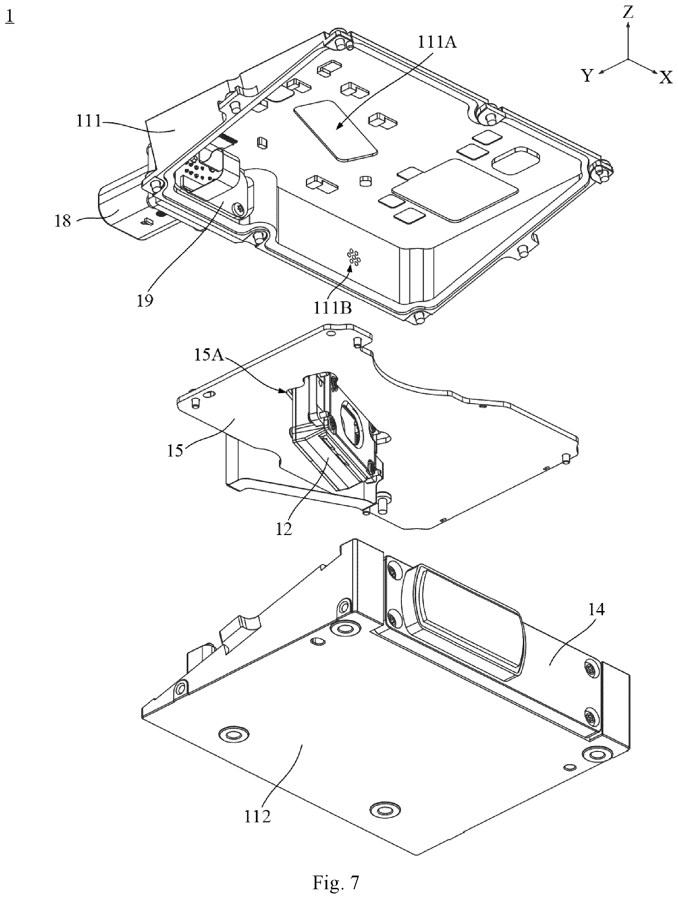

Referring to Figs. 3 and 7. In an embodiment, the housing 11 has a first embedding groove 111A and a second embedding groove 112A which are arranged oppositely along the height direction Z, where the bracket 121 is respectively embedded in the first embedding groove 111A and the second embedding groove 112A on opposite sides along the height direction Z, so that a part of the bracket 121 can overlap with the housing 11, thereby reducing the thickness of the housing 11 to reduce the volume of the LiDAR 1. In an embodiment of the present application, the first embedding groove 111A can be set in the top housing 111, and the second embedding groove 112A can be set in the bottom housing 112.

Referring to Figs. 2 and 3. In an embodiment, the LiDAR 1 includes a sealing ring 16, which is sealed and connected between the top housing 111 and the bottom housing 112. When assembling the LiDAR 1, the transceiver module 13, the light deflection scanning element 12 and the window mirror assembly 14 can be first connected to one of the top housing 111 or the bottom housing 112, and then the top housing 111 is moved so that the top housing 111 and the bottom housing 112 squeeze the sealing ring 16, so that the sealing ring 16 is deformed and fills the connection gap between the top housing 111 and the bottom housing 112, thereby improving the airtightness of the housing 11, reducing the probability of liquid and impurities entering the housing 11 through the gap, and reducing the probability of damage to the transceiver module 13, the light deflection scanning element 12 and the window mirror assembly 14, making the LiDAR 1 have a longer service life.

Referring to Figs. 3 and 7. In an embodiment, the housing 11 has a vent hole 111B, and the LiDAR 1 includes a waterproof breathable membrane 17. The waterproof breathable membrane 17 is arranged at the vent hole 111B, so as to ensure that air circulation inside and outside the housing 11 can be prevented, while preventing liquid from entering the housing 11 through the vent hole 111B, so as to reduce the probability of damage to the transceiver module 13, the light deflection scanning element 12 and the window mirror assembly 14, making the LiDAR 1 have a longer service life.

Referring to Figs. 3 and 7. In an embodiment, the LiDAR 1 comprises a connector 18 and an interface board 19. The connector 18 and the interface board 19 are both connected to the housing 11 and to the main control circuit board 15 for connecting external devices.

Referring to Figs. 3 and 7. In an embodiment of the present application, when assembling the LiDAR 1, the transceiver module 13, the light deflection scanning element 12 and the window mirror assembly 14 can be first assembled on the bottom housing 112 to form a bottom housing module, and the connector 18, the interface board 19 and the waterproof breathable membrane 17 can be assembled on the top housing 111 to form a top housing module , and then the top housing module and the bottom housing module are assembled to form the LiDAR 1, and the assembly efficiency of the LiDAR 1 is improved in the form of modular assembly, thereby improving the production efficiency of the LiDAR 1. In some embodiments, the modular division and assembly process of the LiDAR 1 can be adapted according to the production process steps.

Referring to Fig. 3, in an embodiment of the present application, the structures for installing the transceiver module 13, the light deflection scanning element 12 and the window mirror assembly 14 are all integrally formed with the bottom housing 112, thereby reducing a quantity of assembly materials and simplifying the assembly steps between the transceiver module 13, the light deflection scanning element 12 and the window mirror assembly 14 and the bottom housing 112, to improve the assembly efficiency of the LiDAR 1; and can enable the transceiver module 13, the light deflection scanning element 12, the window mirror assembly 14 and the bottom housing 112 to have a higher assembly accuracy, so that the LiDAR 1 can have a higher detection accuracy.

Referring to Figs. 2 and 8, in an embodiment, the transceiver module 13 includes an emitting assembly 131, a receiving assembly 132 and a beam splitter assembly 133. The emitting assembly 131, the receiving assembly 132 and the beam splitter assembly 133 are all arranged in the housing 11 and are connected to the inner wall of the housing 11. The emitting assembly 131 and the receiving assembly 132 are arranged along the first direction X. Compared with the arrangement of the emitting assembly 131 and the receiving assembly 132 along the height direction Z, the arrangement of the emitting assembly 131 and the receiving assembly 132 along the first direction X can compress the thickness of the housing 11 to reduce the volume of the LiDAR 1.

Referring to Figs. 2 and 8, the emitting assembly 131 includes an emitting module 1311, a collimating module 1312, and a beam reduction mirror 1313. The emitting module 1311 is used to generate an emitted laser beam a. The collimating module 1312 is used to collimate the laser emitted by the emitting module 1311. The beam reduction mirror 1313 is arranged in the outgoing direction of the collimating module 1312, and is used to perform spot compression on the emitted laser beam a collimated by the collimating module 1312. The arrangement of the beam reduction mirror 1313 can improve the spot energy density of the emitted laser beam a.

Exemplarily, the collimating module 1312 adopts a lens system. The emitted laser beam a emitted by the emitting module 1311 is converted into collimated light by the collimating module 1312. Exemplarily, the collimating module 1312 may include a fast axis collimating lens 13121 and a slow axis collimating lens 13122, and the fast axis collimating lens 13121 and the slow axis collimating lens 13122 are respectively an integrated structure. By using the fast axis collimating lens 13121 and the slow axis collimating lens 13122 in the form of a single-piece mirror, the structure can be simplified, the difficulty of light adjustment can be reduced, and mass production and assembly are also facilitated.

Referring to Figs. 2 and 8, the receiving assembly 132 comprises a receiving module 1321 and a focusing module 1322. The receiving module 1321 may include a receiver 13211 and a receiving board 13212. The receiving board 13212 is provided with a driving circuit for driving the receiver 13211 to operate. In an embodiment, the focusing module 1322 is used to receive the reflected laser beam b reflected from the light deflection scanning element 12, and converge it to direct it to the receiving module 1321. Exemplarily, the focusing module 1322 may include a first focusing lens 13221, a second reflex mirror 13222, and a second focusing lens 13223; wherein the first focusing lens 13221 is used to converge the reflected laser beam b and direct it to the second reflex mirror 13222; the second focusing lens 13223 is provided in the light reflection direction of the second reflex mirror 13222, and is used to further converge the reflected laser beam b reflected by the second reflex mirror 13222 and direct it to the receiving module 1321. In an embodiment, the first focusing lens 13221, the second focusing lens 13223 and the second reflex mirror 13222 can be integrated lenses, which can simplify the module structure and facilitate mass production and assembly.

Referring to Figs. 2 and 8, the beam splitter assembly 133 comprises a beam splitter 1331, which is disposed between the beam reduction mirror 1313 and the focusing module 1322. The beam splitter 1331 is used to separate the optical paths of the emitted laser beam a and the reflected laser beam b, to make the emitted laser beam a from the beam reduction mirror 1313 emitted toward the light deflection scanning element 12, and to deflect the received reflected laser beam b reflected back by the light deflection scanning element 12 to the focusing module 1322.

Referring to Figs. 2 and 8. In an embodiment, the LiDAR 1 comprises a first reflex mirror 20. The first reflex mirror 20 deflects the emitted laser beam a transmitted through the beam splitter 1331 and directs it toward the light deflection scanning element 12, and deflects the reflected laser beam b from the light deflection scanning element 12 and directs it toward the focusing module 1322. The first reflex mirror 20 and the window mirror assembly 14 are arranged side by side along the first direction X, so that the optical path between the transceiver module 13 and the light deflection scanning element 12 can be folded and adjusted in direction through the first reflex mirror 20, and the transceiver module 13 and the light deflection scanning element 12 can be arranged along the first direction to make the internal structure compact, thereby reducing the volume of the LiDAR 1. By arranging the centers of the transceiver module 13, the first reflex mirror 20, the light deflection scanning element 12 and the window mirror assembly 14 on the same plane perpendicular to the height direction Z, the optical paths between multiple devices or modules can also be transmitted along the plane, so that the devices and optical paths inside the LiDAR 1 are distributed along the plane, reducing the stacking along the height direction Z, reducing the volume occupied in the height direction, and compressing the size of the housing 11. In an embodiment of the present application, the housing 11 includes a front mounting plate 116 extending in the first direction X, and the first reflex mirror 20 and the window mirror assembly 14 are both arranged on the front mounting plate 116, so as to facilitate modular installation and improve assembly efficiency.

Referring to Figs. 1, 2 and 9, in an embodiment, the emitting module 1311 comprises a lower shell 13111, an upper shell 13112 and an emitting circuit board 13113. The lower shell 13111 is connected to the housing 11; the upper shell 13112 is connected to the lower shell 13111, and the upper shell 13112 and the lower shell 13111 form an accommodating cavity 1311A. The upper shell 13112 has a light outlet 13112A, and the emitted laser beam a is emitted from the light outlet 13112A; the emitting circuit board 13113 is arranged in the accommodating cavity 1311A; and the upper shell 13112, the lower shell 13111 and the emitting circuit board 13113 are arranged along the height direction Z of the housing 11, so as to contact the housing 11 through the lower shell 13111 to dissipate heat from the emitting module 1311. The upper shell 13112, the lower shell 13111 and the emitting circuit board 13113 are arranged along the height direction Z of the housing 11, which can reduce the space occupied by the emitting module 1311 in the thickness direction Z inside the housing 11, reducing the thickness dimension of the LiDAR 1, and reducing the volume of the LiDAR 1.

The emitting circuit board 13113 is wrapped with the upper shell 13112 and the lower shell 13111, which facilitates the assembly and clamping of the emitting circuit board 13113, protects the emitting circuit board 13113, and reduces the probability of damage to the emitting circuit board 13113, thereby making the emitting circuit board 13113 have a longer service life, and making the LiDAR 1 have a longer service life.

Referring to Figs. 1, 2 and 9-11. In an embodiment, the upper shell 13112 forms a limiting groove 13112B, the emitting circuit board 13113 is embedded in the limiting groove 13112B, and the lower shell 13111 is sealed on the notch of the limiting groove 13112B to cooperate with the upper shell 13112 to form an accommodating cavity 1311A, which can protect the emitting circuit board 13113 to reduce the probability of damage to the emitting circuit board 13113, so that the emitting circuit board 13113 can have a longer service life, and thus the LiDAR 1 has a longer service life. The light outlet 13112A penetrates the groove wall of the limiting groove 13112B, so that the emitted laser beam a is easy to be emitted through the light outlet 13112A.

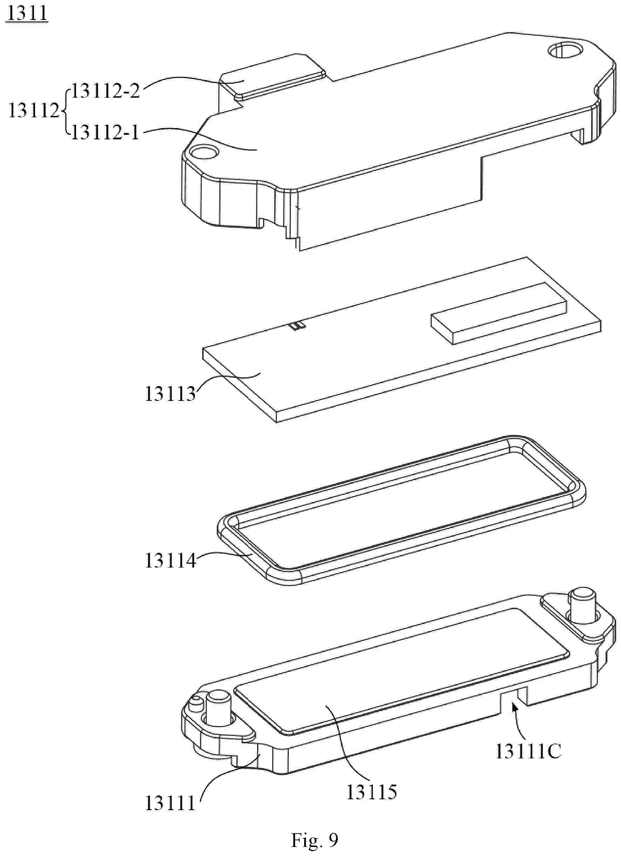

Referring to Figs. 9-11. In an embodiment, a connecting hole 13112C is provided on the upper shell 13112, and the connecting hole 13112C is located outside the limiting groove 13112B. A fastening hole 13111A is provided on the lower shell 13111, and the fastening hole 13111A corresponds to the connecting hole 13112C, and is connected and matched by a screw, so as to realize the connection between the upper shell 13112 and the lower shell 13111, so as to fix the emitting circuit board 13113, and then facilitate the emission light emitted by the emitting circuit board 13113 to be emitted through the light outlet 13112A.

Referring to Figs. 1, 2 and 9-11. In an embodiment, the emitting module 1311 comprises a soft pad 13114, which is supported between the lower shell 13111 and the emitting circuit board 13113. The soft pad 13114 is used to support the emitting circuit board 13113 to prevent the upper shell 13112 and the lower shell 13111 from excessively squeezing the emitting circuit board 13113, reducing the probability of damage to the emitting circuit board 13113, so that the LiDAR 1 has a longer service life. And the soft pad 13114 can be deformed when the LiDAR 1 is vibrated to buffer the vibration transmitted to the emitting circuit board 13113, thereby reducing the vibration amplitude of the emitting circuit board 13113, to ensure that the emitted laser beam a of the emitting circuit board 13113 is still emitted through the light outlet 13112A, and ensure that the LiDAR 1 can work normally. In an embodiment of the present application, the material of the soft pad 13114 can be silicone or rubber.

Referring to Figs. 1, 2 and 9-11. In an embodiment, the lower shell 13111 includes a limiting portion 13115, which is arranged on the side of the lower shell 13111 facing the upper shell 13112, and is used to limit the maximum displacement of the circuit board moving in the direction of the lower shell 13111, so that when the LiDAR 1 vibrates, the emitted laser beam a of the emitting circuit board 13113 still emerges through the light outlet 13112A, ensuring that the LiDAR 1 can work normally. In an embodiment of the present application, the soft pad 13114 can be arranged around the limiting portion 13115, so that the limiting portion 13115 can have a larger contact area with the emitting circuit board 13113, so that the emitting circuit board 13113 is evenly stressed when in contact with the limiting portion 13115, reducing the probability of damage to the emitting circuit board 13113. In some embodiments, the limiting portion 13115 can be disposed on the side of the soft pad 13114, or can be disposed at a distance from the soft pad 13114, both of which can have a buffering and limiting effect on the emitting circuit board 13113.

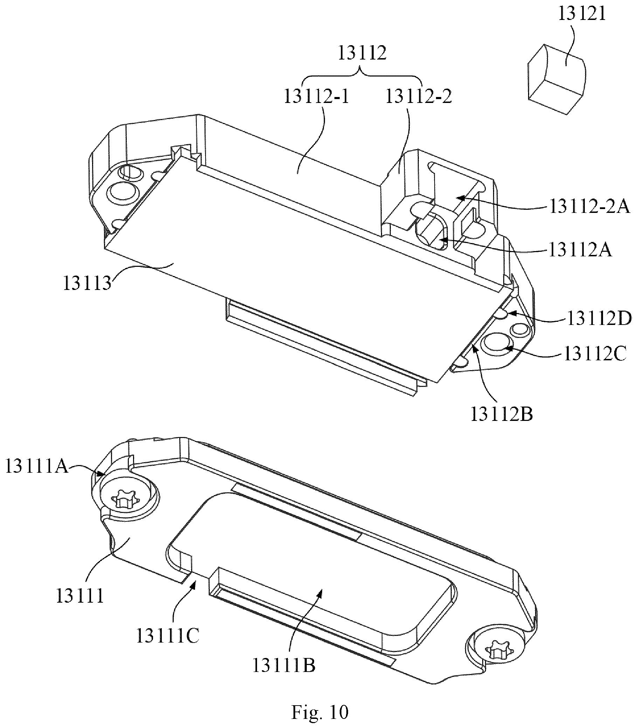

Referring to Figs. 9 and 10. In an embodiment, a first glue dispensing groove 13112D is further formed on the upper shell 13112. The first glue dispensing groove 13112D is arranged on the outer peripheral side of the emitting circuit board 13113. The first glue dispensing groove 13112D is filled with structural glue. The structural glue is bonded to the emitting circuit board 13113 and is used to pre-fix the emitting circuit board 13113 and the upper shell 13112, so as to facilitate clamping the emitting circuit board 13113 between the upper shell 13112 and the lower shell 13111. In an embodiment of the present application, the groove wall of the limiting groove 13112B can be provided with a plurality of first glue dispensing grooves 13112D, and two adj acent first glue dispensing grooves 13112D are arranged at intervals, and each first glue dispensing groove 13112D is connected to the limiting groove 13112B, to increase the contact points between the emitting circuit board 13113 and the upper shell 13112, and improve the connection stability between the emitting circuit board 13113 and the upper shell 13112. In some embodiments, the first glue dispensing groove 13112D can be arranged at other positions of the upper shell 13112, so that the upper shell 13112 is bonded and connected to the emitting circuit board 13113. In an embodiment of the present application, there is no specific restriction on a quantity of the first glue dispensing grooves 13112D and the distribution positions of the first glue dispensing grooves 13112D in the upper shell 13112.

Referring to Figs. 2, 10 and 11. In an embodiment, a thermal conductive glue groove 13111B is provided on the side of the lower shell 13111 facing away from the upper shell 13112. The thermal conductive glue groove 13111B is filled with thermal conductive glue. The thermal conductive glue contacts the inner wall surface of the housing 11, so that the emitting module 1311 can dissipate heat to the housing 11 via the thermal conductive glue, thereby reducing the probability of the emitting circuit board 13113 being damaged due to excessive temperature, so that the emitting circuit board 13113 can have a longer service life, and thus the LiDAR 1 can have a longer service life.

Referring to Figs. 9-11. In an embodiment, the lower shell 13111 is further provided with a glue dispensing port 13111C that passes through the groove wall of the thermal conductive glue groove 13111B. After the lower shell 13111 is connected to the housing 11, the thermal conductive glue groove 13111B can be filled with thermal conductive glue through the glue dispensing port 13111C, thereby ensuring that the thermal conductive glue fills the thermal conductive glue groove 13111B, so that the thermal conductive glue and the lower shell 13111 have the largest contact area, thereby providing the lower shell 13111 with better thermal conductivity to prevent the emitting module 1311 from being damaged, thereby allowing the LiDAR 1 to have a longer practical life.

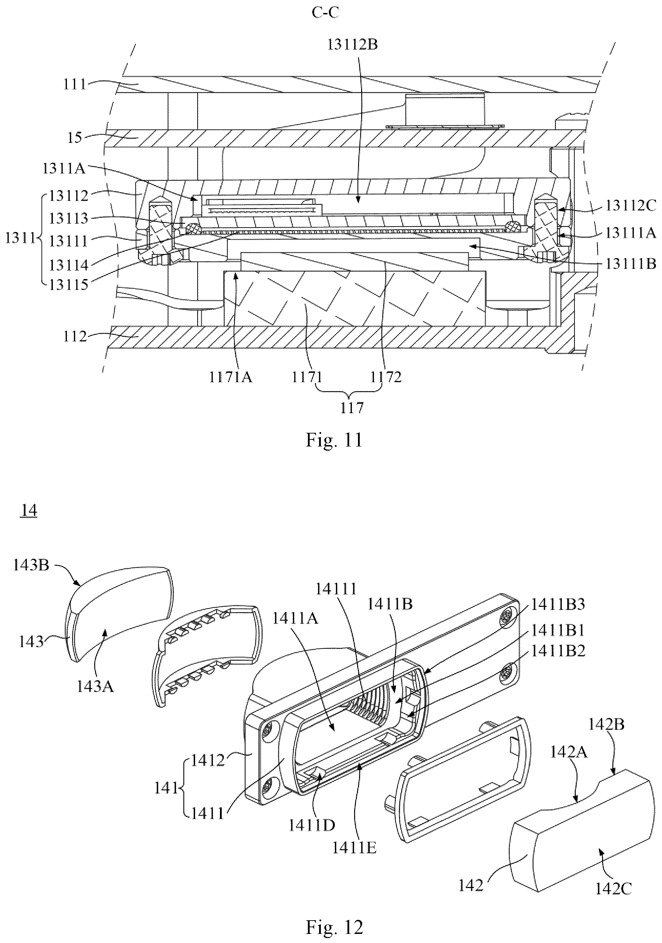

Referring to Figure 11. In an embodiment, a boss 117 is formed on the inner wall surface of the housing 11. The boss 117 abuts against the lower shell 13111 and covers the notch of the thermal conductive glue groove 13111B to prevent the thermal conductive glue from leaking out, thereby ensuring that the thermal conductive glue can fully contact the lower shell 13111 to dissipate heat from the emitting module 1311.

Referring to Figs. 1, 4 and 11. In an embodiment, the boss 117 includes a first convex portion 1171 and a second convex portion 1172 connected to each other, the second convex portion 1172 is located on the top surface of the first convex portion 1171 facing the lower shell 13111, and the second convex portion 1172 at least partially extends into the thermal conductive glue groove 13111B; the emitting module 1311 includes an adhesive member 118, the top surface has a bonding area 1171A, the bonding area 1171A is surrounded by the second convex portion 1172, the adhesive member 118 connects the bonding area 1171A and the lower shell 13111, so that the lower shell 13111 is bonded and connected to the housing 11, thereby connecting the emitting module 1311 to the housing 11. Since the second convex portion 1172 at least partially extends into the thermal conductive glue groove 13111B, the second convex portion 1172 is in full contact with the thermal conductive adhesive to increase the contact area between the boss 117 and the thermal conductive adhesive, thereby increasing the contact area between the housing 11 and the thermal conductive adhesive, thereby facilitating heat dissipation of the emitting module 1311.

Referring to Figs. 1, 9 and 10, in an embodiment, the emitting module 1311 may include a fast axis collimating lens 13121, the upper shell 13112 includes an upper shell body 13112-1 and an extending portion 13112-2, the upper shell body 13112-1 cooperates with the lower shell 13111 to form an accommodating cavity 1311A, the light outlet 13112A is opened in the upper shell body 13112-1, and the extending portion 13112-2 is connected to the outer peripheral side of the upper shell body 13112-1 and is arranged corresponding to the light outlet 13112A. The extending portion 13112-2 has a fixing groove 13112-2A, and the fixing groove 13112-2A is connected to the accommodating cavity 1311A via the light outlet 13112A. The fast axis collimating lens 13121 is embedded in the fixing groove 13112-2A, so that the emitted laser beam a is emitted via the fast axis collimating lens 13121. Connecting the fast axis collimating lens 13121 to the upper shell 13112 can improve the assembly efficiency of the emitting module 1311 and the housing 11, thereby improving the production efficiency of the LiDAR 1.

Referring to Figs. 1, 2 and 12. In an embodiment, the window mirror assembly 14 includes a lens barrel 141, a first window mirror 142 and a second window mirror 143. The lens barrel 141 is connected to the housing 11. The first window mirror 142 and the second window mirror 143 are both connected to the lens barrel 141 and are respectively located at ends of the lens barrel 141, so as to transmit the emitted laser beam a reflected by the light deflection scanning element 12, and transmit the reflected laser beam b to the light deflection scanning element 12. In an embodiment, the lens barrel 141 is detachably connected to the housing 11, so that it is convenient to first assemble the first window mirror 142 and the second window mirror 143 with the lens barrel 141, to form the window mirror assembly 14, so that there is a large space when assembling the window mirror assembly 14, which can improve the convenience and assembly accuracy of the window mirror assembly 14, and then assemble the window mirror assembly 14 with the housing 11 as a module, which can improve the assembly efficiency of the LiDAR 1, thereby improving the production efficiency of the LiDAR 1.

In some embodiments, a plurality of lenses may be provided in the lens barrel 141 to provide focusing, beam expansion, filtering and other functions for the window mirror assembly 14.

Referring to Figs. 1, 2 and 12. In an embodiment, the lens barrel 141 comprises a barrel body 1411 and a mounting portion 1412 connected to the barrel body 1411, an optical channel 1411A is formed in the barrel body 1411, and the mounting portion 1412 is connected to the housing 11; wherein, a first connecting groove 1411B is provided at one end of the optical channel 1411A facing away from the light deflection scanning element 12, and the first window mirror 142 is embedded in the first connecting groove 1411B; a second connecting groove 1411C is provided at one end of the optical channel 1411A facing the light deflection scanning element 12, and the second window mirror 143 is embedded in the second connecting groove 1411C.

Referring to Figs. 1, 2 and 12, the first connecting groove 1411B comprises a first groove bottom wall 1411B1 and a first groove side wall 1411B2. The peripheral side of the first window mirror 142 abuts against the first groove side wall 1411B2. The first window mirror 142 has a first light-transmitting surface 142A and two first abutting surfaces 142B on the side facing the second window mirror 143. The two first abutting surfaces 142B are respectively arranged on both sides of the first light-transmitting surface 142A. The two first abutting surfaces 142B are both abutted against the first groove bottom wall 1411B1 to facilitate positioning of the first window mirror 142 and improve the installation accuracy of the first window mirror 142, thereby improving the detection accuracy of the LiDAR 1.

Referring to Figs. 1, 2 and 12. The first groove side wall 1411B2 is recessed to form a second glue dispensing groove 1411D and a plurality of third glue dispensing grooves 1411E. The second glue dispensing groove 1411D is located at the groove position of the first connecting groove 1411B, and the third glue dispensing groove 1411E is between the second glue dispensing groove 1411D and the first groove bottom wall 1411B 1, and the plurality of third glue dispensing grooves 1411E are arranged at intervals along the circumferential direction of the first connecting groove 1411B. When installing the first window mirror 142, first move the first window mirror 142 so that the two first abutting surfaces 142B are abutted against the first groove bottom wall 1411B1 of the first groove, and then pour structural glue into the third glue dispensing groove 1411E to bond the first window mirror 142 and the barrel body 1411, and finally pour the same or different structural glue as that in the third glue dispensing groove 1411E into the second glue dispensing groove 1411D, to close the slot of the first connecting groove 1411B, thereby reducing the probability of impurities and liquids entering the LiDAR 1 through the slot of the first connecting groove 1411B, thereby reducing the probability of damage to the light deflection scanning element 12, the transceiver module 13 and the window mirror assembly 14, so that the LiDAR 1 can have a longer service life.

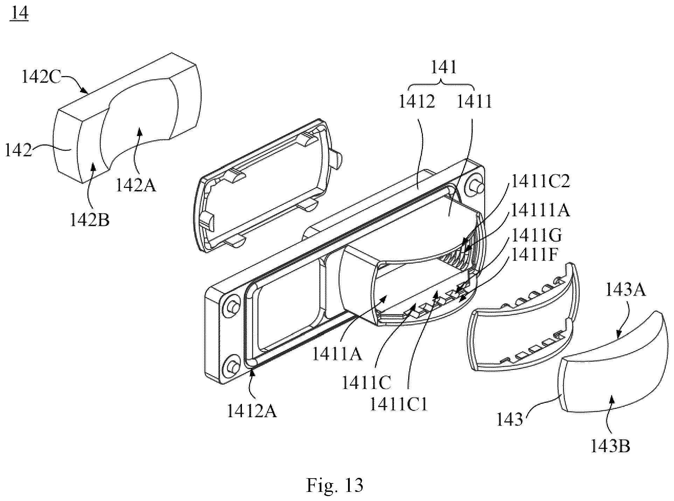

Referring to Figs. 1, 2 and 13. The second connecting groove 1411C comprises a second groove side wall 1411C1, and the second groove side wall 1411C1 is further recessed to form a fourth glue dispensing groove 1411F and a plurality of fifth glue dispensing grooves 1411G. The fourth glue dispensing groove 1411F is located at the groove position of the second connecting groove 1411C, and the plurality of fifth glue dispensing grooves 1411G are arranged at intervals along the circumferential direction of the second connecting groove 1411C. When installing the second window mirror 143, first move the second window mirror 143 so that the second window mirror 143 is embedded in the second connecting groove 1411C, and then pour structural glue into the fifth glue dispensing groove 1411G to bond the second window mirror 143 and the barrel body 1411, and finally pour the same or different structural glue as that in the fifth glue dispensing groove 1411G into the fourth glue dispensing groove 1411F to close the notch of the second connecting groove 1411C, thereby reducing the probability of impurities and liquids entering the LiDAR 1 through the notch of the second connecting groove 1411C, thereby reducing the probability of damage to the light deflection scanning element 12, the transceiver module 13 and the window mirror assembly 14, the LiDAR 1 can have a longer service life.

The structure of the second window mirror 143 may be similar to that of the first window mirror 142, and the second connecting groove 1411C is similar to the first connecting groove 1411B.

Referring to Figs. 1, 12 and 13. In an embodiment, the first light-transmitting surface 142A is recessed in a direction away from the first groove bottom wall 1411B1 and is a curved surface; the second window mirror 143 has a second light-transmitting surface 143A on the side facing the first window mirror 142, and the second light-transmitting surface 143A is recessed in a direction away from the first window mirror 142 and is a curved surface, the first window mirror 142 and the second window mirror 143 are combined into an expanded angle lens, thereby expanding the field of view of the LiDAR 1, simplifying the system architecture of the LiDAR 1, reducing a quantity of devices occupied, and improving the detection efficiency of the LiDAR 1.

Referring to Figs 1, 12 and 13. In an embodiment, the first window mirror 142 has a third light-transmitting surface 142C on the side facing away from the second window mirror 143. The third light-transmitting surface 142C is approximately a plane, and the third light-transmitting surface 142C is the surface of the LiDAR 1 facing the measured area, which can keep the appearance of the LiDAR 1 consistent, thereby improving the appearance of the LiDAR 1. Furthermore, the third light-transmitting surface 142C is approximately a plane, and the probability of wear of the third light-transmitting surface 142C can be reduced during the assembly process of the window mirror assembly 14 and the assembly process of the window mirror assembly 14 and the housing 11, thereby reducing the probability of measurement errors of the LiDAR 1, thereby improving the detection accuracy of the LiDAR 1.

The surface where the notch of the first connecting groove 1411B is located is the first surface 1411B3 which slightly protrudes from the third light-transmitting surface 142C, so as to facilitate the disassembly of the first window mirror 142 and the second window mirror 143 and improve the debugging convenience of the window mirror assembly 14.

Referring to Figs. 1, 12 and 13. In an embodiment, the second window mirror 143 has a fourth light-transmitting surface 143B on the side facing away from the first window mirror 142. The fourth light-transmitting surface 143B protrudes in the direction away from the first window mirror 142 and is an arc surface. The surface where the notch of the second connecting groove 1411C is located is the second surface 1411C2, and the second surface 1411C2 is flush with the fourth light-transmitting surface 143B, so that there is a larger contact area between the barrel body 1411 and the second window mirror 143, so as to improve the connection stability between the barrel body 1411 and the second window mirror 143, and the barrel body 1411 can be used to fully protect the second window mirror 143, so as to reduce the probability of wear of the second window mirror 143 during the assembly process of the window mirror assembly 14 and the housing 11, thereby reducing the probability of measurement errors of the LiDAR 1, thereby improving the detection accuracy of the LiDAR 1.

Referring to Figs. 1, 12 and 13, in an embodiment, the inner wall of the barrel body 1411 is provided with a matting structure 14111, and the matting structure 14111 is used to eliminate stray light in the barrel body 1411. The matting structure 14111 may include but is not limited to a structured aperture, a matte material layer, a groove structure and a rough surface structure.

The matte material layer can be formed by ink coating, matte paint coating, light absorbing film coating, glue dispensing, etc. In addition, physical structures such as the groove structure and the rough surface structure can form a multiple reflection process, thereby effectively reducing the formation of stray light.

Referring to Figs. 1, 12 and 13. In an embodiment, the matting structure 14111 may include a plurality of matting grooves 14111A. The plurality of matting grooves 14111A are all arranged on the inner wall of the barrel body 1411, and two adjacent matting grooves 14111A are spaced apart along the length direction of the barrel body 1411, so that stray light can form a process of multiple reflections in the matting grooves 14111A to absorb the stray light in the barrel body 1411.

Referring to Figs. 1, 2 and 12. In an embodiment, the front mounting plate 116 has a mounting hole 116A, the barrel body 1411 is passed through the mounting hole 116A, and the outer wall of the barrel body 1411 abuts against the hole wall of the mounting hole 116A, which can improve the installation convenience of the window mirror assembly 14 and the housing 11, thereby improving the assembly convenience of the LiDAR 1, so as to improve the production efficiency of the LiDAR 1.

Referring to Figs. 1, 2 and 12. In an embodiment, the front mounting plate 116 further has a plurality of abutting portions 1161, each of which is convexly disposed on the hole wall of the mounting hole 116A, and two adjacent abutting portions 1161 are arranged at intervals, and the surface of each abutting portion 1161 facing the inside of the mounting hole 116A abuts against the outer wall of the barrel body 1411, which can improve the installation stability of the barrel body 1411 and the front mounting plate 116. In some embodiments, the abutting portions 1161 can be provided with 2, 4, 6, ... , and a quantity of abutting portions 1161 can be selected according to the size of the mounting hole 116A and the assembly requirements.

Referring to Figs. 1, 2 and 12. In an embodiment, the front mounting plate 116 has a mounting groove 116B, the mounting hole 116A is arranged at the bottom of the mounting groove 116B and is connected to the mounting groove 116B, and the mounting portion 1412 is at least partially embedded in the mounting groove 116B to increase the contact area between the window mirror assembly 14 and the front mounting plate 116, thereby improving the connection stability between the window mirror assembly 14 and the front mounting plate 116.

The connecting member can be connected to the front mounting plate 116 via a screw member, thereby improving the connection stability between the window mirror assembly 14 and the front mounting plate 116.

The front mounting plate 116 may be connected to the mounting portion 1412 via a threaded member, or the front mounting plate 116 may be snap-connected to the mounting portion 1412.

Referring to Figs. 1, 2 and 13. In an embodiment, the mounting portion 1412 has a sixth glue dispensing groove 1412A on one side of the bottom of the mounting groove 116B. The sixth glue dispensing groove 1412A is filled with structural glue. The structural glue is bonded to the bottom of the mounting groove 116B to improve the connection stability between the window mirror assembly 14 and the front mounting plate 116, and the structural glue can fill the gap between the sixth glue dispensing groove 1412A and the bottom of the mounting groove 116B to prevent impurities and liquids from entering the LiDAR 1, thereby reducing the probability of damage to the light deflection scanning element 12, the transceiver module 13 and the window mirror assembly 14, so that the LiDAR 1 can have a longer service life.

Since the first window mirror 142 and the second window mirror 143 can close the openings at both ends of the lens barrel 141, a closed cavity can be formed inside the lens barrel 141. When the temperature of the external environment changes suddenly, the temperature change on the inner side of the housing 11 becomes slower, thereby reducing the probability of condensation on the surface of the second window mirror 143, thereby preventing the emitted laser beam a and the reflected laser beam b from being refracted or reflected by the condensation generated on the surface of the second window mirror 143 to cause a large amount of stray light, thereby improving the detection accuracy of the LiDAR 1.

The mounting portion 1412 and the housing 11 are in contact with the external environment. When the temperature of the external environment changes suddenly, compared with the temperature-stable window mirror assembly 14, the mounting portion 1412 and the housing 11 are more susceptible to temperature changes and produce condensation that does not affect the detection of the LiDAR 1. Therefore, the probability of condensation forming on the surface of the second window mirror 143 can be reduced, thereby providing reliable guarantee for the higher detection accuracy of the LiDAR 1.

The third light-transmitting surface 142C is the surface of the LiDAR 1 facing the measured area, so the condensation on the third light-transmitting surface 142C can be removed by physical means to eliminate the influence of condensation on the detection of the LiDAR 1.

In a second aspect, an embodiment of the present application provides an autonomous driving device, which includes a device body and a LiDAR 1 installed on the device body. The specific structure of the LiDAR 1 refers to the above embodiment. Since the autonomous driving device adopts all the technical solutions of all the above embodiments, it at least has all the beneficial effects brought by the technical solutions of the above embodiments, which will not be repeated here. Among them, the autonomous driving device can be a car, a ship, an aircraft, etc., without limitation.

The same or similar numbers in the drawings of this embodiment correspond to the same or similar parts; in the description of this application, the terms "upper", "lower", "left", "right", etc. indicate an orientation or position relationship based on the orientation or position relationship shown in the drawings, it is only for the convenience of describing this application and simplifying the description, rather than indicating or implying that the device or element referred to must have a specific orientation, be constructed and operated in a specific orientation. Therefore, the terms describing the position relationship in the drawings are only used for illustrative purposes.

## Claims

1. A LiDAR, comprising a housing, a light deflection scanning element, a transceiver module and a window mirror assembly, wherein the transceiver module and the light deflection scanning element are arranged in the housing;
the transceiver module is configured to generate an emitted laser beam and receive a reflected laser beam;
the light deflection scanning element is configured to deflect the emitted laser beam toward the window mirror assembly, receive and deflect the reflected laser beam returned from a measured area toward the transceiver module;
the window mirror assembly is configured to transmit the emitted laser beam and the reflected laser beam; and
the light deflection scanning element and the transceiver module are arranged along a first direction, the light deflection scanning element and the window mirror assembly are arranged along a second direction, the first direction is perpendicular to the second direction, and the first direction and the second direction are both perpendicular to the height direction of the housing.

2. The LiDAR according to claim 1, further comprising:
a main control circuit board, arranged in the housing and having an avoidance groove;
wherein the avoidance groove penetrates the main control circuit board in the height direction, and the light deflection scanning element is arranged in the avoidance groove.

3. The LiDAR according to claim 2, wherein the housing has a first embedding groove and a second embedding groove arranged opposite to each other along the height direction;
wherein the light deflection scanning element is respectively embedded in the first embedding groove and the second embedding groove at two opposite sides along the height direction.

4. The LiDAR according to claim 2, wherein the light deflection scanning element comprises a bracket and a scanning body fixed to the bracket;
the housing comprises connection protrusions at intervals, the connection protrusions extend in the height direction of the housing, and the bracket abuts against the connection protrusions on opposite sides in a direction perpendicular to the height direction of the housing, and the bracket is detachably connected to the connection protrusions.

5. The LiDAR according to claim 4, wherein one of the connection protrusion and the bracket is provided with a positioning column, the other of the connection protrusion and the bracket is provided with a positioning hole, and the positioning column is inserted into the positioning hole; and/or
one of the connection protrusion and the bracket is provided with a locking hole, the other one is provided with a locking fastener hole, and the locking hole and the locking fastener hole are connected and matched by a screw.

6. The LiDAR according to any one of claims 1 to 5, wherein the transceiver module comprises:
an emitting assembly, configured to generate the emitted laser beam;
a receiving assembly, configured to receive the reflected laser beam; and
a beam splitting assembly, configured to separate the optical paths of the emitted laser beam and the reflected laser beam,
wherein the emitting assembly and the receiving assembly are arranged along the first direction.

7. The LiDAR according to claim 6, further comprising:
a first reflex mirror, configured to deflect the emitted laser beam from the emitting assembly and direct it toward the light deflection scanning element, and further configured to deflect the reflected laser beam from the light deflection scanning element and direct it toward the receiving assembly;
wherein the first reflex mirror and the window mirror assembly are arranged side by side along the first direction.

8. The LiDAR according to claim 7, wherein the housing comprises a front mounting plate extending in the first direction, and the first reflex mirror and the window mirror assembly are both arranged on the front mounting plate.

9. The LiDAR according to claim 6, wherein the emitting assembly comprises an emitting module, and the emitting module comprises:
a lower shell, connected to the housing;
an upper shell, connected to the lower shell, wherein the upper shell and the lower shell form an accommodating cavity, the upper shell has a light outlet, and the emitted laser beam is emitted from the light outlet; and
an emitting circuit board, arranged in the accommodating cavity,
wherein the upper shell, the lower shell and the emitting circuit board are arranged along the height direction of the housing.

10. The LiDAR according to claim 9, wherein the upper shell forms a limiting groove, the emitting circuit board is embedded in the limiting groove, the lower shell is sealed on a notch of the limiting groove to cooperate with the upper shell to form the accommodating cavity, and the light outlet passes through a groove wall of the limiting groove.

11. The LiDAR according to claim 9, wherein a thermal conductive adhesive groove is provided on a side of the lower shell facing away from the upper shell, the thermal conductive adhesive groove is filled with thermal conductive adhesive, and the thermal conductive adhesive contacts an inner wall surface of the housing.

12. The LiDAR according to claim 9, wherein the emitting module further comprises:
a fast axis collimating lens, connected to the upper shell and arranged at the light outlet.

13. The LiDAR according to claim 12, wherein the upper shell includes an upper shell body and an extending portion, the upper shell body cooperates with the lower shell to form the accommodating cavity, the light outlet is provided on the upper shell body, the extending portion is connected to the outer peripheral side of the upper shell body and is arranged corresponding to the light outlet, and the fast axis collimating lens is fixed on the extending portion.

14. The LiDAR according to any one of claims 1 to 5, wherein the window mirror assembly comprises:
a lens barrel, connected to the housing; and
a first window mirror and a second window mirror, both connected to the lens barrel and respectively located at two ends of the lens barrel.

15. The LiDAR according to claim 14, wherein the lens barrel comprises a barrel body and a mounting portion connected to the barrel body, an optical channel is formed in the barrel body, and the mounting portion is connected to the housing, wherein:
a first connecting groove is provided at one end of the optical channel away from the light deflection scanning element, and the first window mirror is embedded in the first connecting groove; and
a second connecting groove is provided at one end of the optical channel facing the light deflection scanning element, and the second window mirror is embedded in the second connecting groove.
